# EUROPÄISCHE PATENTANMELDUNG

(11) **EP 2 026 547 A1**
(43) Veröffentlichungstag der Anmeldung: **18.02.2009**
(21) Anmeldenummer: 08104449.7
(22) Anmeldetag: 18.06.2008
(51) Int. Cl.: H04M 1/725

(54) **Verfahren zum Erinnern an ein Ereignis**

(30) Priorität: 30.07.2007 DE 102007035705
(71) Anmelder: Robert Bosch GmbH, 70442 Stuttgart (DE)
(72) Erfinder: Franz, Michael, 72766 Reutlingen (DE)

(57) **Zusammenfassung**

Die Erfindung betrifft ein Verfahren zum Erinnern an ein Ereignis, das sich für ein bewegliches Gerät (2) ereignet, wobei an das Ereignis erinnert wird, wenn das Gerät (2) aus einer Ruheposition bewegt wird. Weiterhin betrifft die Erfindung eine Einrichtung (6) zum Erinnern an das Ereignis, das sich für das bewegliche Gerät (2) ereignet, wobei diese Einrichtung (6) dazu ausgebildet ist, mit einem Bewegungssensor (8), der einen Zustand des Geräts (2) überwacht, zusammenzuwirken und eine Erinnerung an das Gerät (2) bereitzustellen, wenn das Gerät (2) bewegt wird.

## Beschreibung

Die Erfindung betrifft ein Verfahren zum Erinnern an ein Ereignis, eine Einrichtung zum Erinnern an ein Ereignis, ein Gerät, ein Computerprogramm und ein Computerprogrammprodukt.

### Stand der Technik

Aus der Druckschrift US 2006/0111093 A1 sind eine Einrichtung und ein Verfahren zur Kontrolle eines tragbaren Endgeräts, insbesondere eines Mobiltelefons, bekannt. Hierbei ist vorgesehen, dass das Endgerät zum Ausführen unterschiedlicher Funktionen, wie bspw. Telefonieren, Austauschen von elektronischen Textnachrichten sowie Fotografieren, ausgebildet ist. Zur Realisierung des in der Druckschrift US 2006/0111093 A1 vorgesehenen Verfahrens wird der Umstand genutzt, dass ein Nutzer des Endgeräts zum Ausführen der angesprochenen unterschiedlichen Funktionen das Endgerät abhängig von einer jeweiligen Funktion im Raum orientiert bzw. ausrichtet sowie festhält und somit mit Händen greift. Das mobile Endgerät weist einen Bewegungssensor zur Bestimmung der Position sowie Kontaktsensoren, durch die nachvollziehbar ist, wie das Endgerät jeweils festgehalten wird, auf. Aus Informationen, die von den erwähnten Sensoren bereitgestellt werden, wird gefolgert, welche Funktion der Nutzer mit dem Endgerät ausführen will, so dass das Endgerät entsprechend darauf eingestellt wird.

Ein Gerät zur drahtlosen Übertragung eines Alarms ist aus der Druckschrift WO 2004/042669 A1 bekannt. Dieses Gerät umfasst einen Bewegungssensor und ist dazu ausgebildet, in einem bewegbaren Objekt, bspw. einem Fahrzeug, untergebracht zu werden. Außerdem umfasst dieses Gerät Mittel zur Bereitstellung eines Alarms in Form einer elektronischen Textnachricht. Zur Verwendung dieses Geräts ist vorgesehen, dass dieses bspw. in einem geparkten Fahrzeug abgelegt wird. Falls dieses Fahrzeug gestohlen werden sollte, wird dieses in Bewegung gesetzt, so dass auch das Gerät in Bewegung gesetzt wird, was wiederum durch den Bewegungssensor des Geräts registriert wird, wobei aufgrund der registrierten Bewegung eine Alarmierung eines Besitzers des Fahrzeugs erfolgt, indem das Gerät eine Textnachricht an ein bspw. als Mobiltelefon ausgebildetes Endgerät eines Besitzers schickt. Weiterhin kann das Gerät ein Modul zur satellitengestützten Erfassung einer Position aufweisen, so dass ausgehend von dem Gerät regelmäßig Nachrichten mit Informationen über einen jeweiligen Standort des Geräts und somit des Fahrzeugs an den Besitzer übermittelt werden können.

Vor diesem Hintergrund werden ein Verfahren, eine Einrichtung, ein Gerät, ein Computerprogramm und ein Computerprogrammprodukt mit den Merkmalen der unabhängigen Patentansprüche vorgestellt.

### Offenbarung der Erfindung

Bei dem erfindungsgemäßen Verfahren zum Erinnern an ein Ereignis, das sich für ein bewegliches Gerät ereignet, ist vorgesehen, dass an das Ereignis erinnert wird, wenn das Gerät aus einer Ruheposition bewegt wird.

Somit kann üblicherweise an jene Ereignisse erinnert werden, die sich ereignen, wenn sich das Gerät in der Ruheposition befindet. Dies geschieht vor dem Hintergrund, dass sich das Gerät in der Ruheposition befindet, wenn es von einem Nutzer nicht benutzt wird. Sobald der Nutzer das Gerät jedoch wieder benutzt, ist vorgesehen, dass er das Gerät aus der Ruheposition heraus bewegt und somit dessen Lage verändert wird, wobei das Gerät bspw. aus einem passiven Modus heraus aktiviert wird, was wiederum bedeutet, dass der Nutzer dem Gerät durch Bewegen des Geräts aus der Ruheposition wieder seine Aufmerksamkeit schenkt. In diesem Augenblick kann an mindestens ein Ereignis und somit an das Ereignis oder ggf. an mehrere Ereignisse automatisch erneut erinnert werden.

In Ausgestaltung des Verfahrens kann als eine erste Bedingung vorgesehen sein, dass sich das Ereignis ereignet, wenn sich das Gerät in der Ruheposition befindet. Alternativ und/oder ergänzend kann als eine zweite Bedingung auch vorgesehen sein, dass das Verfahren durchgeführt wird, wenn der Nutzer des Geräts auf das eingetretene Ereignis nicht reagiert.

Falls sich das Gerät in der Ruheposition befindet, während das Ereignis eintritt und der Nutzer des Geräts währenddessen auf das Ereignis nicht reagiert, ist es daher ein Indiz dafür, dass der Nutzer das Ereignis nicht registriert bzw. wahrgenommen hat. Es ist daher davon auszugehen, dass der Nutzer auf das Ereignis lediglich mit kurzer Zeitverzögerung reagiert, indem er das Gerät bewegt und/oder in geeigneter Weise bedient, bspw. durch Betätigen und somit Drücken mindestens einer Funktionstaste des Geräts. Bei Ausbleiben einer derartigen Reaktion auf das Ereignis, wird mit der Erfindung ermöglicht, dass auf das bereits in der Vergangenheit liegende Ereignis noch einmal bzw. erneut aufmerksam gemacht wird, sobald der Nutzer das Gerät aus der Ruheposition bewegt, wobei es sich hierbei üblicherweise um einen Hinweis dafür handelt, dass der Nutzer nunmehr in der Lage ist, auf das Ereignis in geeigneter Weise zu reagieren.

Bei einer weiteren Variante des Verfahrens kann vorgesehen sein, dass zum Erinnern an das Ereignis ein akustisches und/oder optisches, bspw. audiovisuelles und/oder ein mechanisches Signal, bspw. eine Bewegung oder eine Vibration des Geräts, bereitgestellt wird.

Bei einem Gerät, für das das vorliegende Verfahren geeignet ist, ist in der Regel vorgesehen, dass bei erstmaligem bzw. ursprünglichem Eintreten und somit Stattfinden des Ereignisses durch das Gerät ein Signal erzeugt wird. Falls der Nutzer des Geräts das bei ursprünglichem Eintreten des Ereignisses erzeugte Signal nicht wahrnehmen kann, kann er auf das Ereignis nicht in geeigneter Weise reagieren. Dies kann bspw. daran liegen, dass sich das Gerät an einem anderen Ort als der Besitzer und somit in der erwähnten Ruheposition befindet. Sobald der Nutzer das Gerät wieder wahrnimmt, wird er es aus der Ruheposition heraus bewegen und somit, falls sich zuvor das Ereignis ereignet hat, die erneute Erinnerung an das Ereignis automatisch aktivieren, so dass aufgrund der Bewegung heraus aus der Ruheposition das Signal zu dem erneut zu erinnernden Ereignis bereitgestellt wird. Falls zum Signalisieren eines Ereignisses vorgesehen sein sollte, dass das Gerät vibriert, so ist vorgesehen, dass zur Durchführung des Verfahrens ausgebildete Module des Geräts derart eingestellt sind, dass das Vibrieren bspw. nicht als eine Bewegung aus der Ruheposition heraus definiert ist.

In Ausgestaltung der Erfindung ist vorgesehen, dass der Zustand des beweglichen Geräts von einem Bewegungssensor ermittelt wird. Somit ist durch eine Überwachung seitens des Bewegungssensors in einfacher Weise nachvollziehbar, ob sich das Gerät in der Ruheposition befindet, aus dieser Ruheposition herausbewegt wird oder ggf. permanent bewegt wird, wenn es bspw. transportiert wird.

In der Regel befindet sich das Gerät in einem unbewegten Zustand, wenn es sich in der Ruheposition befindet. Der Bewegungssensor kann jedoch auch derart eingestellt sein, dass zwischen unterschiedlichen Arten einer Bewegung differenziert wird. Demnach kann die beschriebene Ruheposition unter Umständen auch nach Bedarf eines Nutzers geeignet eingestellt und somit definiert werden. Das kann demnach bedeuten, dass sich das Gerät je nach Definition auch dann noch in der Ruheposition befindet, wenn sich dieses bspw. gleichmäßig und/oder gleichförmig, etwa mit konstanter Geschwindigkeit oder im Rahmen einer monotonen, sich andauernd wiederholenden Bewegungsabfolge, bewegt. Je nach Definition bzw. Einstellung kann die Ruheposition z. B. dadurch beendet werden, dass das Gerät beschleunigt und insbesondere über ein bestimmtes Maß hinaus beschleunigt wird, so dass ein Beschleunigen des Geräts einem Herausbewegen des Geräts aus der Ruheposition entspricht.

Somit kann auch dann an das Ereignis erinnert werden, wenn das Gerät bspw. während einer Zugfahrt an einem Platz deponiert und somit mit weitgehend konstanter Geschwindigkeit bewegt wird. Falls nun das Ereignis bei Abwesenheit des Nutzers eintritt, kann an dieses Ereignis erinnert werden, sobald der Nutzer des Geräts bei seiner Rückkehr dieses wieder an sich nimmt und somit dadurch aus der Ruheposition bewegt, indem er das Gerät beschleunigt.

In Ausgestaltung ist vorgesehen, dass das mobile bzw. tragbare Gerät als ein Kommunikationsgerät, üblicherweise ein Mobiltelefon, ausgebildet ist.

Bei einem Ereignis kann es sich um ein Vorkommnis handeln, in das das Gerät passiv und/oder aktiv eingebunden ist. Somit kann ein Stattfinden des Ereignisses weiterhin dadurch definiert sein, dass das Ereignis stattfindet, wenn zu dem Gerät bspw. ausgehend von einem anderen Gerät drahtlos Kontakt aufgenommen wird. Falls das Gerät als Kommunikationsgerät ausgebildet ist, kann dies bedeuten, dass der Versuch unternommen wird, an das Gerät eine bspw. elektronische Nachricht zu übermitteln. Falls das Gerät als Kommunikationsgerät, insbesondere Mobiltelefon, ausgebildet ist, kann ein Aufnehmen des Kontakts zu dem Gerät einem Anruf oder einer Übermittlung einer Nachricht, die einen Text und/oder eine audiovisuelle Nachricht, bspw. eine sog. SMS, enthält, definiert sein. Weiterhin kann für den Fall, dass das Gerät bspw. eine Kalenderfunktion umfasst, vorgesehen sein, dass in Ausgestaltung als Ereignis eine Aktivierung eines Eintrages und somit Termins in dem Kalender vorgesehen ist. Falls auf eine ursprüngliche Aktivierung des Eintrags, die mit einem Signal verbunden sein kann, nicht reagiert wurde, weil sich das Gerät währenddessen in der Ruheposition befand, kann bei Bewegung des Geräts aus der Ruheposition erneut erinnert werden.

Die erfindungsgemäße Einrichtung ist zum Erinnern an ein Ereignis, das sich für ein bewegliches Gerät ereignet, ausgebildet. Dabei wirkt diese Einrichtung mit einem Bewegungssensor zusammen, der einen Zustand des Geräts überwacht. Weiterhin ist die Einrichtung dazu ausgebildet, eine Erinnerung an das Ereignis bereitzustellen, wenn das Gerät bewegt wird.

Das erfindungsgemäße Gerät weist eine erfindungsgemäße Einrichtung auf.

Es ist vorgesehen, dass die erfindungsgemäße Einrichtung sowie das erfindungsgemäße Gerät dazu ausgebildet sind, mindestens einen, in der Regel sämtliche Schritte des erfindungsgemäßen Verfahrens durchzuführen. Dabei können die Einrichtung und/oder das Gerät dazu ausgebildet sein, an das Ereignis unter Berücksichtigung der in Ausgestaltung des Verfahrens vorgesehenen Bedingungen erneut zu erinnern.

Hierzu ist in Ausgestaltung vorgesehen, dass das Gerät einen Bewegungssensor aufweist und bspw. als ein mobiles Kommunikationsgerät, etwa ein Mobiltelefon, ausgebildet ist.

Die Erfindung betrifft außerdem ein Computerprogramm mit Programmcodemitteln, das dazu vorgesehen ist, alle Schritte des beschriebenen Verfahrens durchzuführen, wenn das Computerprogramm auf einem Computer oder einer entsprechenden Recheneinheit, insbesondere in einer erfindungsgemäßen Einrichtung, ausgeführt wird.

Das erfindungsgemäße Computerprogramm mit Programmcodemitteln, die auf einem computerlesbaren Datenträger gespeichert sind, ist zum Durchführen aller Schritte eines erfindungsgemäßen Verfahrens ausgebildet, wenn das Computerprogramm auf einem Computer oder einer entsprechenden Recheneinheit, insbesondere in einer voranstehend beschriebenen Einrichtung, ausgeführt wird.

Mit der Erfindung kann bspw. eine Erinnerung an Nachrichten oder Telefonate bei Bewegung des als Mobiltelefon ausgebildeten Geräts bereitgestellt werden. Üblicherweise erzeugt das Gerät das akustische Signal und klingelt dabei, wenn jemand mit einem andere Gerät versucht, mit dem Gerät und somit dem Nutzer des Geräts Kontakt aufzunehmen, indem er an das Gerät eine Textnachricht übermittelt oder versucht, das Gerät anzurufen. Falls der Besitzer des Mobiltelefons jedoch sein Mobiltelefon an einem Ort liegen lässt, so dass sich das Gerät in der Ruheposition befindet, kann der Nutzer auf den Versuch zur Aufnahme des Kontakts und somit auf das Ereignis nicht reagieren, weil er das bspw. akustische Signal nicht vernommen hat.

Falls der Besitzer des Mobilfunkgeräts dieses wieder zu sich nimmt, ohne dabei dieses durch Bedienen der Tastatur oder Betrachten des Anzeigefelds zu überprüfen, wird ihm signalisiert, dass jemand versucht hat, ihn zu erreichen bzw. Kontakt aufzunehmen. Dies kann vor allem dann vorkommen, wenn sich das Mobiltelefon in einer Jacke oder in einer Tasche befinden sollte. Falls der Besitzer nunmehr die Jacke oder Tasche wieder zu sich nimmt, wird er regelmäßig keinen Blick auf das Anzeigefeld des Mobiltelefons werfen. Für eine derartige Situation ist bspw. die vorliegende Erfindung geeignet. Durch örtliche Veränderung des Geräts, d.h. Bewegen des Geräts aus der Ruheposition, wobei die Nachricht zuvor angekommen ist, als sich das Gerät in der Ruheposition befunden hat, wobei der Nutzer des Geräts die Nachricht bspw. durch Bedienen einer Tastatur des Geräts nicht entgegengenommen hat, erinnert das Gerät durch ein erneutes Signal, in der Regel ein erneutes Klingeln und/oder ein Vibrieren, den Nutzer daran, dass jemand versucht hat, ihn zu erreichen, so dass dieser darauf hingewiesen wird, dass sich ein Ereignis ereignet hat.

Bei herkömmlichen Mobiltelefonen ist vorgesehen, dass bei einer Nichtannahme der Nachricht oder eines Anrufs der Empfänger und somit der Besitzer meist erst dann darauf aufmerksam gemacht wird, dass jemand versucht hat, ihn zu erreichen, indem er auf dem Anzeigefeld bzw. Display des Mobiltelefons bzw. Handys eine Nachrichten- und/oder Anrufliste überprüft oder bspw. durch ein Blinken oder ein sonstiges optisches Signal des Mobiltelefons darauf aufmerksam gemacht wird. Insbesondere für den Fall, dass das Mobiltelefon in der Jacke oder in der Tasche angeordnet sein sollte, ist das optische Signal verdeckt und somit für den Nutzer nicht sichtbar, so dass der Nutzer über das Ereignis nicht informiert und somit nicht benachrichtigt wird.

Durch Vorsehen des Bewegungs- bzw. Lagesensors, der insbesondere dazu ausgebildet ist, auf Beschleunigungen und dabei auf einen Wert oder eine Art der Beschleunigung zu reagieren, wird eine Veränderung der Lage und somit Position des Geräts auch nach einer nicht angenommen Nachricht detektiert. Eine erneute Benachrichtigung und somit die erneute Erinnerung an das Ereignis kann nun durch bekannte Signalisierungsmechanismen, wie Klingeln und/oder Vibration, erfolgen.

Bei der Durchführung des Verfahrens können von dem Gerät und/oder der Einrichtung die nachfolgend beschriebenen Funktionen ausgeführt werden. Über den Bewegungssensor kann eine räumliche Lage des Geräts erfasst werden. Weiterhin kann das Eintreten des Ereignisses, üblicherweise der Eingang mindestens einer Nachricht, erfasst werden. Weiterhin kann überprüft werden, ob die eingegangene Nachricht durch geeignetes Bedienen des Geräts entgegengenommen wird. Falls die Nachricht nicht entgegengenommen wird und zu einem späteren Zeitpunkt die räumliche Lage und somit Position des Geräts und somit Position verändert wird, kann im Rahmen des erfindungsgemäßen Verfahrens ein Signal in Form eines Signaltons und/oder eines Vibrationssignals abgegeben werden.

Zur Realisierung des Verfahrens können sog. MEMS (micor-electro-mechanical-system) -Sensoren für mikroelektromechanische Systeme benutzt werden, wobei derartige MEMS-Sensoren als Bewegungssensoren in Geräte eingebaut werden können, um mit der Einrichtung zusammenzuwirken.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt eine Ausführungsform eines erfindungsgemäßen Geräts in einer Ruheposition in schematischer Darstellung.
- Figur 2: zeigt das Gerät aus Figur 1 bei einem Eintreten eines Ereignisses.
- Figur 3: zeigt das Gerät aus den Figuren 1 und 2 in der Ruheposition.
- Figur 4: zeigt das Gerät aus den Figuren 1 bis 3, wenn dieses aus der Ruheposition heraus bewegt wird.

### Ausführungsform der Erfindung

Die Erfindung ist anhand eines Ausführungsbeispiels in der Zeichnung schematisch dargestellt und wird im folgenden unter Bezugnahme auf die Zeichnung ausführlich beschrieben.

Die Figuren werden zusammenhängend und übergreifend beschrieben, gleiche Bezugszeichen bezeichnen gleiche Komponenten.

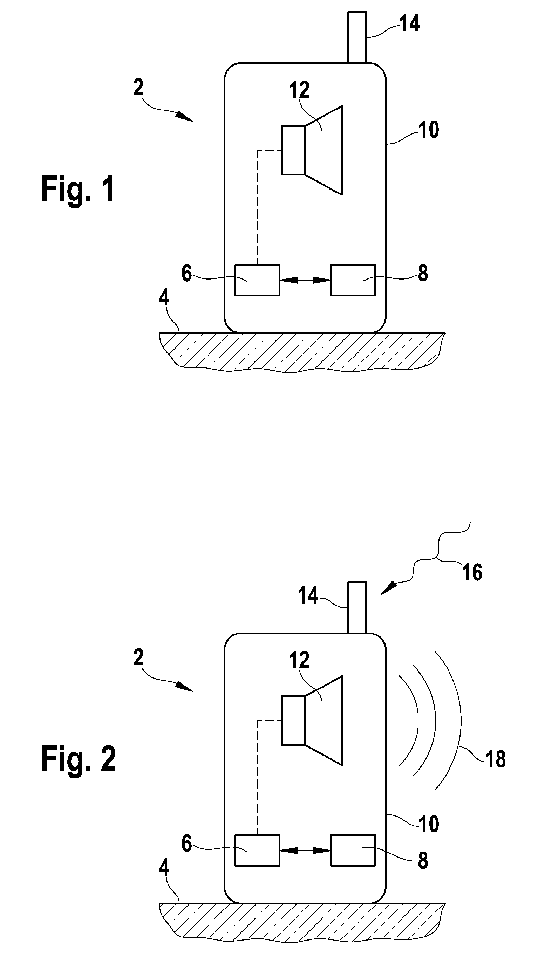

Die Figuren 1 bis 4 zeigen jeweils eine Ausführungsform eines erfindungsgemäßen Geräts 2 in schematischer Darstellung und weiterhin vier zeitlich aufeinanderfolgende Situationen, die eine mögliche Ausführungsform eines erfindungsgemäßen Verfahrens begleiten.

Dabei ist vorgesehen, dass das Gerät 2 in den in den Figuren 1 bis 3 schematisch dargestellten Situationen in einer Ruhestellung befindet, was dadurch verdeutlicht ist, dass das Gerät 2 an einer Position 4 angeordnet und somit relativ zu der Position 4 nicht bewegt und somit nicht beschleunigt wird.

In der vorliegenden Ausführungsform ist das Gerät 2 als ein Mobiltelefon ausgebildet, wobei in der vorliegenden schematischen Darstellung lediglich die zur Realisierung des Verfahrens nötigen Komponenten des Geräts 2 dargestellt sind. Weitere für Mobiltelefone übliche Komponenten, wie bspw. ein optisches Anzeigefeld, eine Tastatur, ein Mikrofon, usw. sind in den Figuren 1 bis 4 nicht dargestellt.

In der in den Figuren 1 bis 4 gezeigten Ausführungsform des Geräts 2 sind die zur Ausführung des Verfahrens ausgebildeten Module des Geräts 2 gezeigt, nämlich eine erfindungsgemäße Einrichtung 6, die mit einem Bewegungssensor 8 zusammenwirkt und in vorliegender Ausführungsform, wie der Bewegungssensor 8 innerhalb eines Gehäuses 10 des Geräts 2 angeordnet ist. Weiterhin sind in den Figuren 1 bis 4 ein Lautsprecher 12 sowie eine Antenne 14 des Geräts 2 dargestellt.

Ausgehend von der in Figur 1 gezeigten Darstellung, bei der sich das Gerät 2 in der Ruheposition befindet, ist in der in Figur 2 dargestellten Situation vorgesehen, dass für das Gerät 2 eine Kontaktaufnahme erfolgt, wobei in der vorliegenden Ausführungsform ein Kontakt 16 durch Übermitteln einer Nachricht an das Gerät 2 aufgenommen wird. Durch die beschriebene Kontaktaufnahme findet für das Gerät 2 ein Ereignis statt. Bei herkömmlicher Funktionsweise ist vorgesehen, dass bei Eintreffen der Nachricht über den Lautsprecher 12 ein akustisches Signal 18 erzeugt wird, um an das Ereignis, in diesem Fall das Eintreffen der Nachricht, aufmerksam zu machen und somit ein erstes Mal zu erinnern. Je nach Art des Ereignisses wird das akustische Signal 18 für einen bestimmten Zeitraum bereitgestellt.

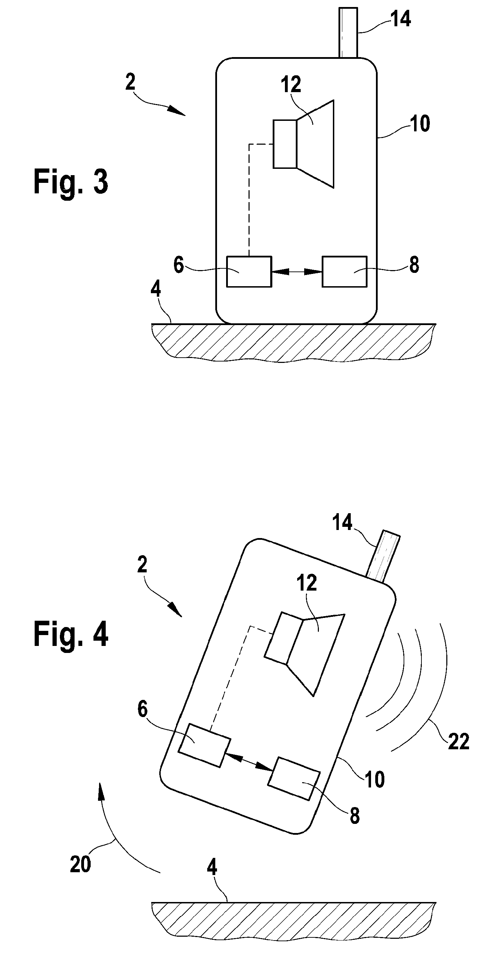

Figur 3 zeigt das Gerät 2 in einer Situation nach Eintreten des Ereignisses, sobald das akustische Signal 18 nicht mehr erzeugt wird.

Die abschließende Figur 4 zeigt das Gerät 2 in einer Situation, wenn für dieses eine Bewegung 20 durchgeführt wird, wobei das Gerät 2 von einem Nutzer des Geräts von der Position 4 und somit relativ zu der Position 4 beschleunigt und somit aus der Ruheposition heraus bewegt wird. Eine derartige Änderung einer Bewegung des Geräts 2 wird von dem Bewegungssensor 8 registriert, worauf die Einrichtung 6 durch den Bewegungssensor 8 aktivieren wird. Ausgehend von der Einrichtung 6 wird sodann der Lautsprecher 12 aktiviert, so dass an das Ereignis, hier die Aufnahme des Kontakts 16 zu dem Gerät 2, durch ein akustisches Signal 22 erneut erinnert wird.

So wird dem Nutzer des Geräts 2, sobald er dieses aus der Ruheposition heraus bewegt, verdeutlicht, dass sich für das Gerät 2 das Ereignis ereignet hat, als sich das Gerät 2, wie in einer der Figuren 1 bis 3 gezeigt, noch in der Ruheposition befunden hat und der Nutzer auf das Eintreten des Ereignisses nicht durch geeignetes Bedienen des Geräts 2 reagiert hat.

## Patentansprüche

1. Verfahren zum Erinnern an ein Ereignis, das sich für ein bewegliches Gerät (2) ereignet, wobei an das Ereignis erinnert wird, wenn das Gerät (2) aus einer Ruheposition bewegt wird.

2. Verfahren nach Anspruch 1, bei dem vorgesehen ist, dass sich das Ereignis ereignet, wenn sich das Gerät (2) in der Ruheposition befindet.

3. Verfahren nach Anspruch 1 oder 2, das durchgeführt wird, wenn ein Nutzer des Geräts (2) auf das eingetretene Ereignis nicht reagiert.

4. Verfahren nach einem der voranstehenden Ansprüche, bei dem zum Erinnern an das Ereignis ein Signal (22) bereitgestellt wird.

5. Verfahren nach einem der voranstehenden Ansprüche, bei dem ein Zustand des beweglichen Geräts (2) von einem Bewegungssensor (8) ermittelt wird.

6. Verfahren nach einem der voranstehenden Ansprüche, das für ein als Kommunikationsgerät ausgebildetes Gerät (2) durchgeführt wird.

7. Verfahren nach einem der voranstehenden Ansprüche, bei dem das Ereignis stattfindet, wenn zu dem Gerät (2) ein Kontakt (16) aufgenommen wird.

8. Einrichtung zum Erinnern an ein Ereignis, das sich für ein bewegliches Gerät (2) ereignet, wobei diese Einrichtung (6) dazu ausgebildet ist, mit einem Bewegungssensor (8), der einen Zustand des Geräts (2) überwacht, zusammenzuwirken und eine Erinnerung an das Ereignis bereitzustellen, wenn das Gerät (2) bewegt wird.

9. Gerät, das eine Einrichtung (6) nach Anspruch 8 aufweist.

10. Gerät nach Anspruch 9, das einen Bewegungssensor (8) aufweist.

11. Gerät nach Anspruch 9 oder 10, das als ein mobiles Kommunikationsgerät ausgebildet ist.

12. Computerprogramm mit Programmcodemitteln, um alle Schritte eines Verfahrens nach einem der Ansprüche 1 bis 7 durchzuführen, wenn das Computerprogramm auf einem Computer oder einer entsprechenden Recheneinheit, insbesondere in einer Einrichtung (6) nach Anspruch 8, ausgeführt wird.

13. Computerprogrammprodukt mit Programmcodemitteln, die auf einem computerlesbaren Datenträger gespeichert sind, um alle Schritte eines Verfahrens nach einem der Ansprüche 1 bis 7 durchzuführen, wenn das Computerprogramm auf einem Computer oder einer entsprechenden Recheneinheit, insbesondere in einer Einrichtung (6) nach Anspruch 8, ausgeführt wird.
